**Europäisches Patentamt**

**European Patent Office**

**Office européen des brevets**

(19)

(11) Veröffentlichungsnummer: **0 230 236 B1**

(12) # EUROPÄISCHE PATENTSCHRIFT

(45) Veröffentlichungstag der Patentschrift: **09.10.91**

(51) Int. Cl.⁵: **F16M 11/04**

(21) Anmeldenummer: **87100213.5**

(22) Anmeldetag: **09.01.87**

(54) **Einrichtung zum Positionieren von Informationsgeräten.**

(30) Priorität: **11.01.86 DE 3600613**

(43) Veröffentlichungstag der Anmeldung:
**29.07.87 Patentblatt 87/31**

(45) Bekanntmachung des Hinweises auf die
Patenterteilung:
**09.10.91 Patentblatt 91/41**

(84) Benannte Vertragsstaaten:
**AT BE CH DE ES FR GB IT LI LU NL SE**

(56) Entgegenhaltungen:
DE-A- 3 311 161    DE-A- 3 415 497
DE-U- 7 931 786    DE-U- 8 512 337
DE-U- 8 530 047    FR-A- 2 503 049
GB-A- 2 154 442    US-A- 1 682 180
US-A- 3 358 957    US-A- 3 952 982
US-A- 4 516 751    US-A- 4 562 987

(73) Patentinhaber: **Wella Aktiengesellschaft**
**Berliner Allee 65**
**W-6100 Darmstadt(DE)**

(72) Erfinder: **Brähler, Manfred**
**Am Fronhof 20**
**W-6402 Grossenlüder(DE)**
Erfinder: **Noll, Erwin**
**Gartenstrasse 24**
**W-6418 Hünfeld(DE)**
Erfinder: **Rousek, Heinz**
**Wartburgring 4**
**W-6418 Hünfeld(DE)**
Erfinder: **Rogler, Ernst**
**Vor der Grube 9**
**W-6108 Weiterstadt 1(DE)**
Erfinder: **Zang, Rupert**
**Stadtseestrasse 14**
**W-8754 Grossostheim(DE)**

## Beschreibung

Die Erfindung betrifft ein Tragesystem zum Positionieren von Geräten nach dem Oberbegriff des Anspruchs 1.

Bekannt sind verschiedenste Vorrichtungen zum Positionieren von beispielsweise Informationsgeräten, die jeweils für bestimmte Randbedingungen konzipiert sind bei unterschiedlichen Anforderungen und für einen bestimmten individuellen Anwendungsfall ausgelegt sind. Ein nachträglich erforderlicher zusätzlicher Freiheitsgrad des Geräteträgers, bzw. eine zusätzliche Variation in der Bewegungsfreiheit des Geräteträgers ist hierbei wirtschaftlich nicht möglich oder unpraktikabel.

Um beispielsweise einen größeren Schwenkbereich eines zu tragenden Geräts zu erhalten, wird bei einem gattungsbildenden Tragesystem nach der DE-A-3311 161 vorgeschlagen, mehrere identische Tragelemente hintereinander zu verbinden, wodurch die Höhe des Geräts immer höher mit der Anzahl der Tragelemente wird.

Es ist daher Aufgabe der Erfindung, ein gattungsgleiches System zu schaffen, daß kostengünstig ist und mit möglichst wenig Bauelementen den verschiedensten Anforderungen zum Tragen von Geräten gerecht wird. So soll das System so flexibel sein, daß es anpaßbar ist an die verschiedensten räumlichen Aufstellmöglichkeiten, an verschiedenen Benutzungsverhältnisse und Arbeitssitzplatzpositionen. Auch soll es möglich sein, daß das System Freiheitsgrade aufweist für eine gemeinsame Benutzung von verschieden angeordneten Arbeitsplätzen.

Gelöst wird diese Aufgabe gemäß dem kennzeichnenden Teil des Anspruchs 1. Weitere vorteilhafte Ausgestaltungen der Erfindung gehen aus den Unteransprüchen hervor.

Das Tragesystem ist dadurch flexibel, daß verschiedene Tragelemente einer Klasse (A) einzeln oder in wahlweiser Kombination einsetzbar sind.

Innerhalb der Klasse (A) sind für verschiedene Freiheitsgradanforderungen des Systems verschiedene Tragelemente vorgesehen wie ein horizontaler Schwenkarm, ein höhenverstellbarer Schwenkarm, ein Höhenstock, wahlweise feststellbar. Durch gezielte Kombination dieser Elemente ergeben sich die vielfältigsten Einrichtungsmöglichkeiten zur Erfassung größerer Bewegungsräume.

Die Elemente der Klasse (A) sind das Verbindungsglied(er) zwischen dem Geräteaufnahme- und dem Lastaufnehmerelement.

Weiterer Bewegungsraum wird dadurch erreicht, daß ein höhenverstellbarer Schwenkarm vorgesehen ist.

Als weiteres Element der Klasse (A) ist ein Höhenstock vorgesehen. Hierdurch ist ein vorgegebener Höhenversatz zwischen dem Geräteaufnahmeelement und dem Lastaufnehmerelement möglich.

Ein anderer Höhenstock weist eine Höheneinstelleinrichtung auf, womit ein Geräteaufnahmeelement in der Höhe variiert werden kann.

In einer Weiterbildung der Erfindung ist eine Klasse (B) von Geräteaufnahmeelementen vorgesehen, z. B. in Form von verschiedenen plattenförmigen Aufnahmen für unterschiedliche Geräte.

Dadurch, daß unterhalb der plattenförmigen Geräteaufnahme ein erstes Verbindungselement vorgesehen ist und daß die Elemente der Klasse (A) mit einem zweiten Verbindungselement versehen sind, wobei die ersten und die zweiten Verbindungselemente miteinander kommunizieren, sind die Elemente der Klasse (A) und (B) beliebig miteinander kombinierbar. Durch dieses System sind die verschiedensten Anforderungen zum Tragen von Informationsgeräten realisierbar.

In einer Weiterbildung der Geräteaufnahme weist diese eine Dreh-oder/und Kippeinrichtung auf. Dadurch kann ein auf der Aufnahme stehendes Informationsgerät in eine optimale Arbeitslage gebracht werden. Durch eine Arretierungseinrichtung läßt sich die eingestellte Position der Aufnahme fixieren.

In einer anderen Weiterbildung der Aufnahme ist unterhalb dieser eine zweite Aufnahme angeordnet, die zur Ablage, beispielsweise eines Eingabegerätes, dienen kann. Diese zweite Aufnahme kann mit einer Verschiebeeinrichtung versehen werden und ist damit schubladenartig in eine vorgerückte Arbeitsposition bringbar. Eine zusätzliche Kippeinrichtung der zweiten Aufnahme ermöglicht eine ergonomisch optimale Position für beispielsweise ein Eingabegerät. Die zweite Aufnahme kann aber auch in einer festen Arbeitsposition einseitig versetzt zu der ersten Aufnahme angeordnet werden. Im Rahmen der Erfindung kann vorgesehen sein, die zweite Aufnahme lösbar mit der ersten Aufnahme zu verbinden. Dadurch ergibt sich die Möglichkeit, wahlweise ein Zusatzgerät (Eingabegerät) versetzt zur ersten Aufnahme zu positionieren.

In einer zusätzlichen Weiterbildung der Erfindung ist eine Klasse (C) von Lastaufnehmerelementen vorgesehen zum Tragen von Elementen der Klassen A und B, die weitere Kombinationsmöglichkeiten schafft. So können z. B. als Lastaufnehmerelemente vorgesehen werden: Tischbefestigungs-, Tischklemmen-, Tischaufstell-, Säulen-, Wand-, Decken-, Gestell-, Schlitten- bzw. Laufwagenträger.

Eine Verbindungssicherung der ersten und zweiten Verbindungselemente verhindert ein unbeabsichtigtes Lösen der miteinander verbundenen Elemente.

Für eine optimale Kombinationsvielfalt ist es vorteilhaft, starre Schwenkarmtypen für jeweils einen Schwenkradius von 200 mm und 450 mm vorzusehen.

Für den höhenverstellbaren Schwenkarm hat sich eine Länge von 450 mm zwischen den Verbindungselementen als vorteilhaft erwiesen sowie ein Höhenschwenkbereich von 200 mm wie auch für den höhenverstellbaren Höhenstock.

Die in den Figuren offenbarten Ausführungsbeispiele geben nur einen Ausschnitt von Ausgestaltungsmöglichkeiten der einzelnen Elemente und Elementenkombinationen wieder. Es ist daher im Rahmen der Erfindung, weitere Ausgestaltungsund Kombinationsmöglichkeiten vorzusehen.

Im folgenden wird anhand von zum Teil schematisch dargestellten Ausführungsbeispielen die Erfindung näher erläutert.

Es zeigt:

Fig. 1      in einer Seitenansicht einen starren Schwenkarm als Element der Klasse A;

Fig. 2      in einer Draufsicht den Schwenkarm gemäß Fig. 1;

Fig. 3      in einer Seitenansicht einen höhenverstellbaren Schwenkarm als Element der Klasse A;

Fig. 4      in einer Seitenansicht einen Höhenstock mit vorgegebener Höhe als Element der Klasse A;

Fig. 5, 6      in zwei Seitenansichten einen höhenverstellbaren Stock als Element der Klasse A;

Fig. 7      in einer Seitenansicht eine Geräteaufnahme mit einem ersten Verbindungselement als Element der Klasse B;

Fig. 8      in einer Draufsicht auf das erste Verbindungselement die Aufnahme gemäß Fig. 7;

Fig. 9      in einer Seitenansicht eine Aufnahme wie Fig. 7, jedoch mit einer zweiten Aufnahme;

Fig. 10      in einer Draufsicht auf das erste Verbindungselement die Aufnahme gemäß Fig. 9;

Fig. 11      in einer Seitenansicht eine weitere Ausbildung der Aufnahme gemäß Fig. 10, jedoch mit einer verschiebbaren zweiten Aufnahme;

Fig. 12      in einer weiteren um 90 Grad verdrehten Seitenansicht mit Blickrichtung auf die der zweiten Aufnahme abgewandten Seite gemäß Fig. 11;

Fig. 13      in einer Schnittdarstellung und Seitenansicht ein Element der Klasse C als in eine Arbeitsplatte eingelassene Buchse;

Fig. 14      eine Buchse entsprechend Fig. 13, jedoch auf eine Arbeitsplatte befestigt;

Fig. 15      in einer Seitenansicht und Schnittdarstellung einen Tischklemmenträger als Element der Klasse C;

Fig. 16      in einer Draufsicht den Tischklemmenträger gemäß Fig. 15;

Fig. 17      in einer Seitenansicht einen Tischaufstellträger der Klasse C von Elementen;

Fig. 18      in einer Draufsicht den Tischaufstellträger gemäß Fig. 17;

Fig. 19      in einer Seitenansicht einen Säulenträger als Element der Klasse C;

Fig. 20      in einer Seitenansicht einen Wandträger als Element der Klasse C;

Fig. 21      in einer Seitenansicht einen Gestellträger mit einem Laufschlitten als Element der Klasse C,

Fig. 22      in einer Seitenansicht ein Kombinationsbeispiel mit Elementen aus den drei Klassen A, B, C, nämlich einem Wandträger, einem höhenverstellbaren Schwenkarm und einer Aufnahme;

Fig. 23      in einer Seitenansicht eine Kombination von Elementen der drei Klassen A, B, C mit einem Gestellträger, der einen Schlittenträger aufweist und einem starren Schwenkarm sowie einem höhenverstellbaren Stock mit einer Aufnahme;

Fig. 24      in einer Seitenansicht eine Kombination von Elementen der drei Klassen A, B, C mit einem Tischklemmenträger, zwei hintereinander angeordneten starren Schwenkarmen und einer Aufnahme.

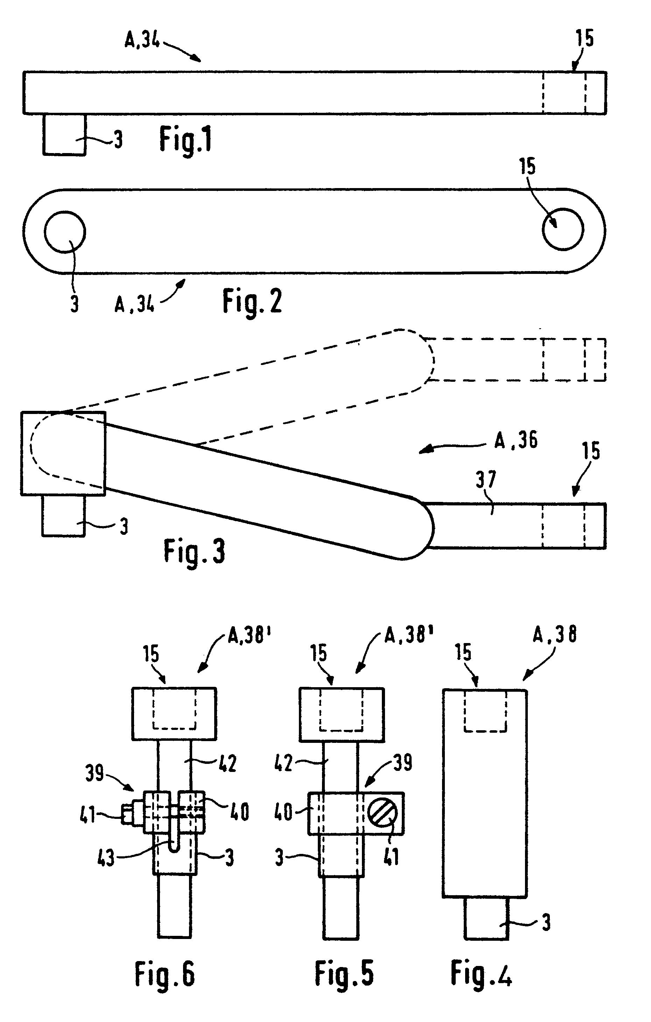

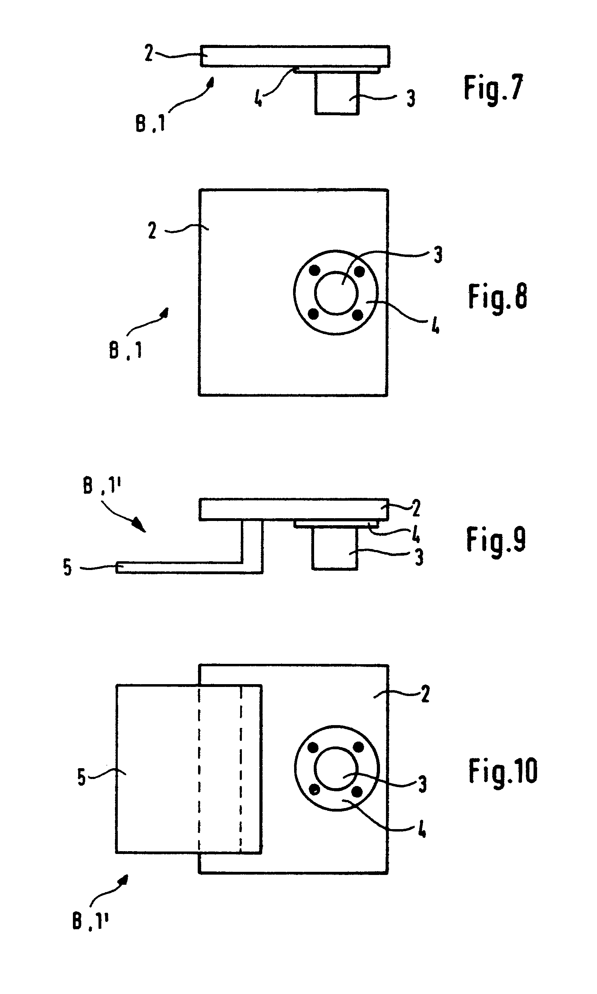

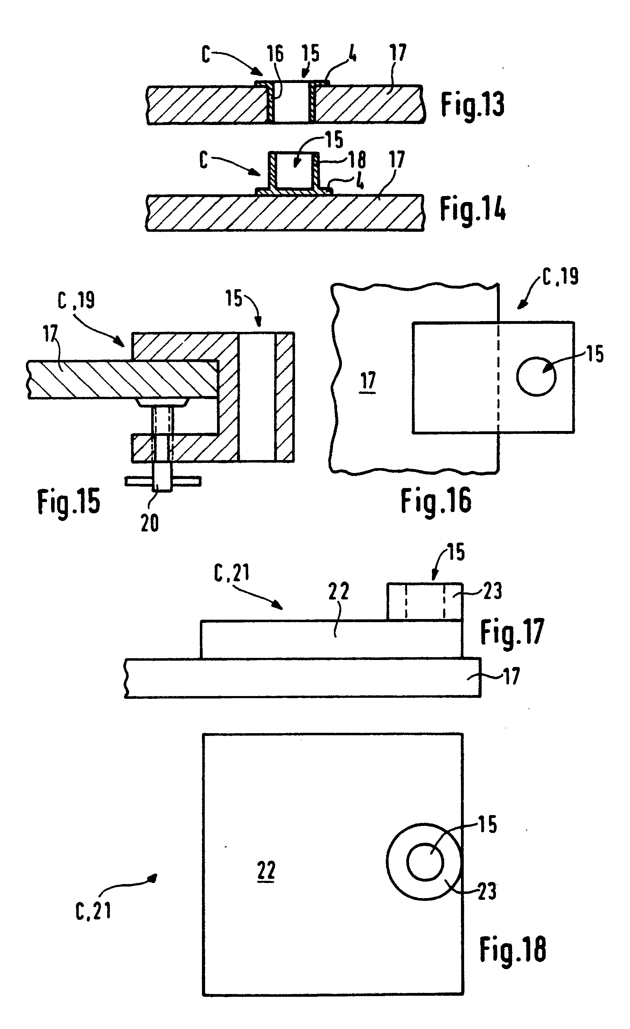

Tragelemente der Klasse A zeigen die Fig. 1 bis 6. In den Fig. 7 bis 12 sind Geräteaufnahmeelemente der Klasse B dargestellt. Die Fig. 13 bis 21 zeigen Lastaufnehmerelemente der Klasse C.

Als Tragelement der Klasse A ist in der Fig. 1 in einer Ausgestaltung ein starrer Schwenkarm 34 dargestellt. Der Schwenkarm 34 ist stabförmig ausgebildet mit einem rechteckigen Querschnitt und weist an einem Ende ein erstes Verbindungselement 3 und an dem anderen Ende ein zweites Verbindungselement 15 auf. Es ist von Kombinationsvorteil, zwei verschiedene Längen der Schwenkarme 34 vorzusehen, z. B. 200 mm und 450 mm.

In Fig. 2 ist in einer Draufsicht auf das erste Verbindungselement 3 der Schwenkarm 34 gemäß Fig. 1 dargestellt.

Ein weiteres Ausführungsbeispiel eines Tragelements der Klasse A ist als höhenverstellbarer Schwenkarm 36 in der Fig. 3 dargestellt. Dieser Schwenkarm 36 ist so ausgebildet, daß er eine jeweils manuell eingestellte Höhenposition beibehält und daß der Ausleger 37 in jeder Position eine waagerechte Position beibehält. An seinem freien Ende weist der Ausleger 37 ein zweites Verbindungselement 15 auf. Das andere Ende des Schwenkarmes 36 weist ein erstes Verbindungselement 3 auf.

In der Fig. 4 ist ein Tragelement der Klasse A als Höhenstock 38 dargestellt. Der Höhenstock 38 ist von zylindrischer Gestalt und weist an seinem unteren Ende ein erstes Verbindungselement 3 auf. Am anderen Ende des Höhenstockes 38 ist axial zu dem ersten Verbindungselement 3 ein zweites Verbindungselement 15 angeordnet.

Im Gegensatz zu dem Höhenstock 38 gemäß Fig. 4, bei dem die Höhe zwischen dem ersten und zweiten Verbindungselement 3, 15 fest vorgegeben ist, weist der Höhenstock 38` gemäß Fig. 5 eine Höheneinstelleinrichtung 39 auf, mit der die Distanz zwischen dem ersten und zweiten Verbindungselement 3, 15 in weiten Grenzen höheneinstellbar ist. Das erste Verbindungselement 3 ist als Hohlzylinder ausgebildet und ist im oberen Bereich mit einer klemmbaren Muffe 40 lösbar verbunden. Zum Festklemmen der eingestellten Höhe kann diese mittels einer Klemmschraube 41 eingestellt werden. Das hohlzylindrische erste Verbindungselement 3 ist so ausgestaltet, daß bei nicht festgestellter Klemmschraube 41 der längliche zylindrische Ständer 42 leichtgängig durch das hohlzylindrische erste Verbindungselement 3 geführt werden kann. Eine feste Verbindung zwischen dem ersten Verbindungselement 3 und dem zweiten Verbindungselement 15 wird durch ein Festdrehen mit der Klemmschraube 41 erreicht, wozu im oberen Bereich das hohlzylindrische erste Verbindungselement 3 einen länglichen Schlitz 43 in einer Flucht zu dem Schlitz der Muffe 40 aufweist (Fig. 6).

In der Fig. 7 ist ein Geräteaufnahmeelement der Klasse B in Ausgestaltung einer Tragplatte 2 dargestellt. Unterhalb der Tragplatte 2 ist ein erstes Verbindungselement 3 befestigt. Dieses erste Verbindungselement 3 ist mittels eines Befestigungskragens 4 mit der Tragplatte 2 verbunden und kann zugleich als Auflagesitz für ein Element der Klasse C dienen. Die Tragplatte 2 dient zum Tragen von Informationsgeräten und kann mit nicht dargestellten Wänden gegen Verrutschen des Informationsgeräts versehen werden.

Fig. 8 zeigt in einer Draufsicht von Fig.7 das erste Verbindungselement 3, das mittels Schrauben an die Tragplatte 2 befestigt ist.

In einer weiteren Ausgestaltung der Tragplatte 2 ist untehalb dieser eine zweite Tragplatte 5 zur Arbeitsseite hin einseitig versetzt angeordnet. Diese zweite Tragplatte 5 kann beispielsweise als Ablage für ein Eingabegerät dienen. Es kann vorgesehen werden, die zweite Tragplatte 5 wahlweise mit der Tragplatte 2 zu verbinden (Fig. 9).

Fig. 10 zeigt in einer Draufsicht auf das erste Verbindungselement 3 die Tragplatte 2 gemäß Fig. 9.

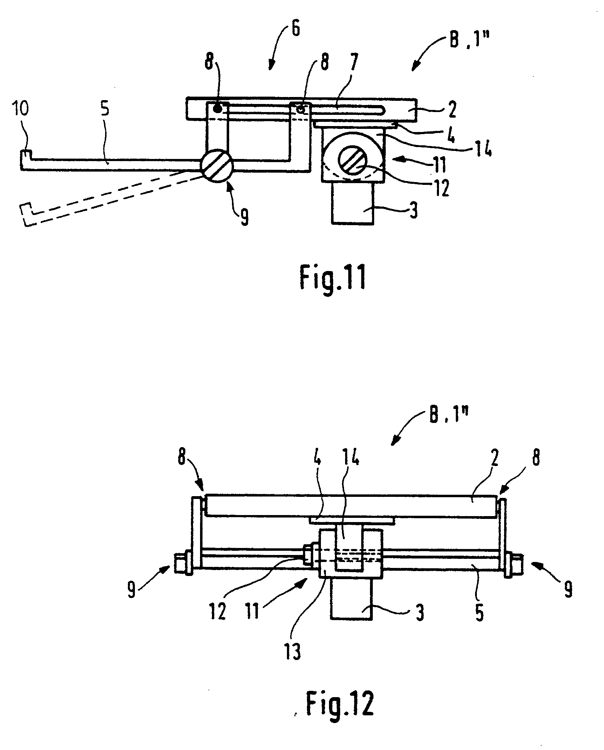

Eine Weiterbildung der zweiten Tragplatte 5 zeigt die Fig. 11. Mittels einer Verschiebeeinrichtung 6 läßt sich die zweite Tragplatte 5 schubladenartig verschieben, und zwar von einer Park- in eine Arbeitsposition und umgekehrt. Die Verschiebeeinrichtung 6 besteht aus einer beiderseitigen Führungsschiene 7, in der mittels Führungszapfen 8 die zwei te Tragplatte 5 schiebbar ist. Mittels einer Kippeinrichtung 9 läßt sich die zweite Tragplatte 5 in eine Kipposition für ein beispielsweise Eingabegerät bringen. Am freien Ende der zweiten Tragplatte 5 ist eine erhabene Kante 10 angeordnet, die ein etwaiges Verrutschen des Eingabegeräts verhindert.

In einer Ausgestaltung des ersten Verbindungselementes 3 ist dieses mit einer Kippeinrichtung 11 versehen, und zwar zwischen dem ersten Verbindungselement 3 und dem Befestigungskragen 4. Mittels einer Arretierungseinrichtung 12 ist der eingestellte Kippwinkel der Tragplatte 2 fixierbar. Die Arretierungseinrichtung 12 ist hierbei mittels einer Schraubklemmung realisiert. In einer der zweiten Tragplatte 5 abgewandten Aufsicht ist zur besseren Anschauung das Tragelement 1" in der Fig. 12 dargestellt.

Fig. 13 zeigt in einer Schnittdarstellung ein zweites Verbindungselement 15 als ein Lastaufnehmerelement der Klasse C. Dieses zweite Verbindungselement 15 ist in Form einer Buchse 16 in eine Arbeitsplatte 17 eingelassen und weist zwecks Befestigung an der Arbeitsplatte 17 einen Befestigungskragen 4 auf.

Die gleiche Buchse 16 kann aber auch auf die Arbeitsplatte 17 als Tischbefestigungsträger 18 vorgesehen werden (Fig. 14).

In der Fig. 15 ist als Lastaufnehmer ein Element der Klasse C ein Tischklemmenträger 19 dargestellt. Zwecks Befestigung an der Arbeitsplatte 17 ist eine Klemmspindel 20 vorgesehen. Eine Draufsicht von oben auf den Tischklemmenträger 19 ist in der Fig. 16 dargestellt.

In der Fig. 17 ist als Lastaufnehmer ein Element der Klasse C ein Tischaufstellträger 21 dargestellt. Dieser besteht aus einer Tragplatte 22 und einem Befestigungsträger 23, der ein zweites Verbindungselement 15 aufweist.

In einer Draufsicht auf das zweite Verbindungselement 15 ist der Tischaufstellträger 21 in der Fig. 18 dargestellt.

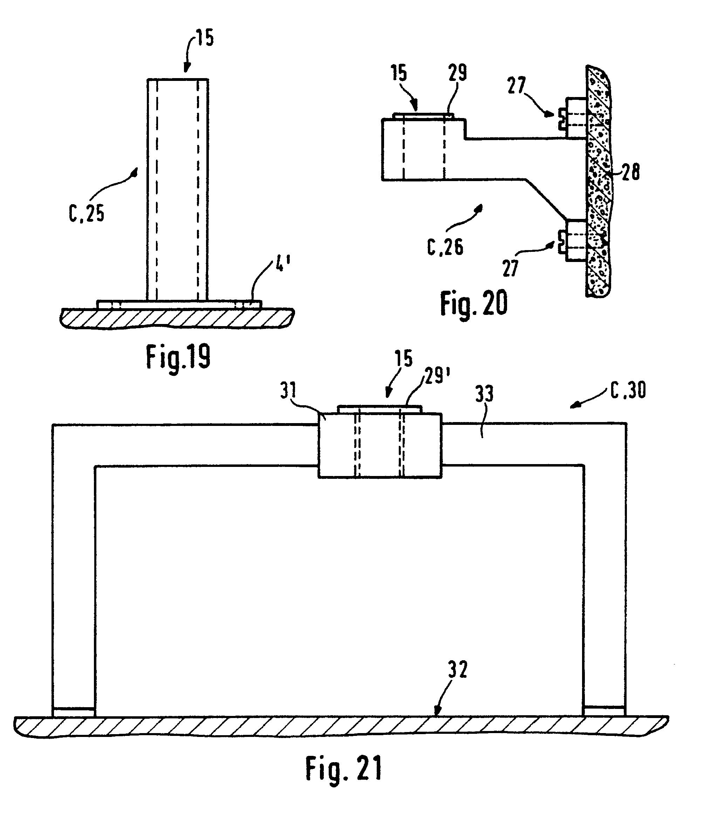

In der Fig. 19 ist als Lastaufnehmer ein Element der Klasse C ein Säulenträger 25 dargestellt. Zur Befestigung auf einen Boden weist der Säulenträger 25 einen Befestigungskragen 4` auf.

Als ein weiteres Beispiel für ein Element der Klasse C ist in Fig. 20 ein Wandträger 26 dargestellt. Der Wandträger 26 weist Befestigungsmittel 27 für eine Befestigung an einer Wand 28 auf. Im Bereich des freien Endes des Wandträgers 26 ist in senkrechter Orientierung ein zweites Verbindungselement 15 angeordnet. Durch einen Kranz 29 wird die Reibung eines daraufliegenden Tragelements verringert.

In der Fig. 21 ist als Element der Klasse C ein Gestellträger 30 mit einem darauf angeordneten Schlitten- bzw. Laufwagenträger 31 dargestellt. Ein solcher Gestellträger 30 dient zum freistehenden Tragen eines Gerätes auf einem Boden 32. Durch den versetzbaren Schlittenträger 31 längs der Trägerschiene 33 ist eine entsprechende horizontale Positionierung des Schlittenträgers 31 möglich. Der Schlittenträger 31 weist ein zweites Verbindungselement 15 auf, wobei ein Kranz 29` als Gegenlager für ein Element der Klasse A dient. Der Schlittenträger 31 kann zusätzlich noch mit einer Arretierungseinrichtung zum Feststellen der eingestellten Position auf der Trägerschiene 33 versehen werden.

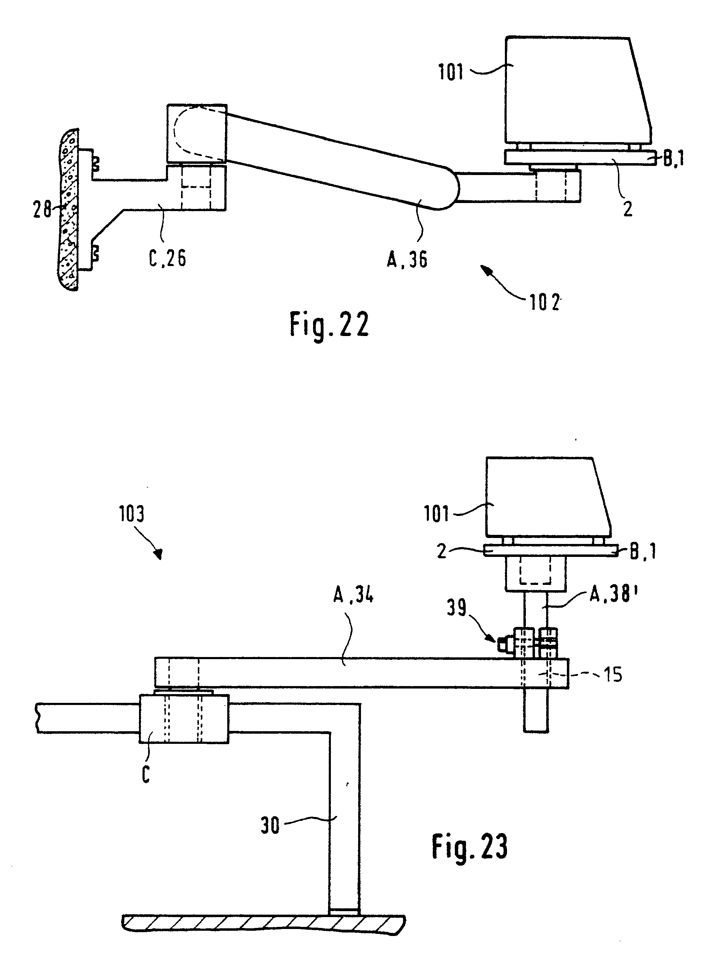

Im folgenden werden einige Kombinationen von Elementen der Klassen A, B, C dargestellt:
So zeigt die Fig. 22 eine Einrichtung 102 mit einer Kombination von je einem Element aus den Klassen A, B, und C. Mit der Befestigung des Wandträgers 26 an der Wand 28 ist eine bestimmte Grundhöhe vorgegeben. Durch Aufsetzen eines höhenverstellbaren Schwenkarms 36 auf den Wandträger 26 ist die auf dem Schwenkarm 36 aufgesteckte Tragplatte 2 in einem vorgegebenem Schwenkbereich höhenverstellbar. Zusätzlich ist die ein Informationsgerät 101 tragende Tragplatte 2 verschwenkbar um die Achse des Wandträgers 26.

Ein weiteres Ausführungsbeispiel einer Einrichtung 103 zeigt Fig. 23. Hier sind je ein Element aus den Klassen B und C sowie zwei verschiedene Elemente der Klasse A miteinander kombiniert. Der Gestellträger 30 ist mit einem starren Schwenkarm 34 verbunden. Mit dem zweiten Verbindungselement 15 des Schwenkarmes 34 ist ein höhenverstellbarer Höhenstock 38` verbunden, der wiederum die Tragplatte 2 trägt. Eine individuelle Einstellung der Tragplattenhöhe kann mit der Höheneinstelleinrichtung 39 vorgenommen werden.

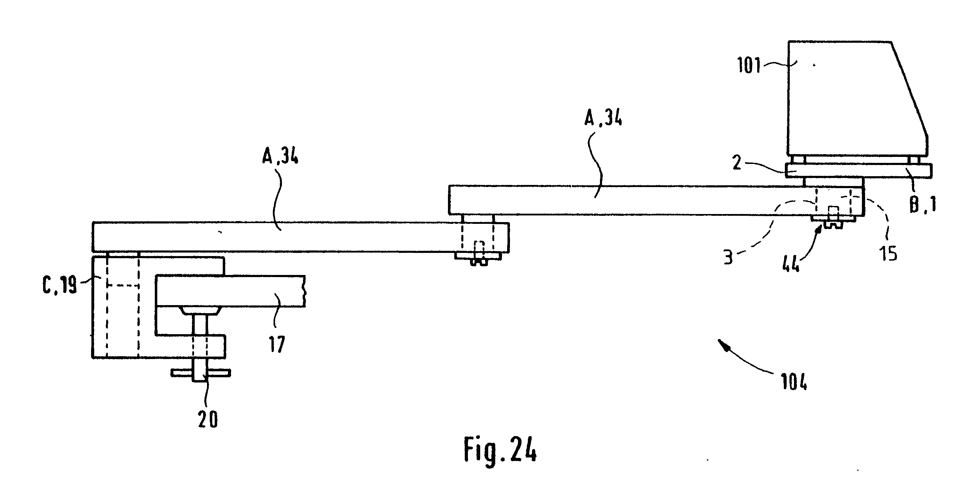

In einem anderen Ausführungsbeispiel einer Einrichtung 104 gemäß Fig. 24 ist hier ein Tischklemmenträger 19 vorgesehen, der mit einem Schwenkarm 34 verbunden ist. Dieser Schwenkarm 34 ist mit einem zweiten Schwenkarm 34 verbunden, der an seinem freien Ende mit der drehbaren Tragplatte 2 verbunden ist. Durch diese Anordnung kann die Tragplatte 2 an jeden Punkt einer Kreisfläche stationiert werden. Der maximale Flächenradius ergibt sich durch die Entfernung der Drehachse des zweiten Verbindungselementes 15 des Tischklemmenträgers 19 und dem zweiten Verbindungselement 15 des zweiten Schwenkarmes 34. Durch Zusammenspreizen der beiden Schwenkarme und/oder gemeinsames Verschwenken der beiden Schwenkarme 34 ist die Tragplatte 2 gezielt positionierbar.

Gegen ungewolltes Herausheben der Tragplatte 2 aus dem zweiten Verbindungselement 15 des zweiten Schwenkarmes 34 ist das erste Verbindungselement 3 der Tragplatte 2 mit einer Verbindungssicherung 44 versehen. In dieser schematischen Darstellung ist das erste Verbindungselement 3 der Tragplatte 2 am unteren Ende mit einer Sicherungsscheibe und einer Schraubverbindung versehen.

Zusammenfassend bietet die Erfindung folgende Vorteile:

1. Gezielte Auswahl eines oder mehrerer gleicher oder/und verschiedener Tragelemente aus einer Klasse (A) in wahlweiser Kombination je nach geforderter Bewegungsfunktion.

2. In einer Weiterbildung der Erfindung kann - je nach den Anforderungen des zu tragenden Geräts - eine gezielte Auswahl eines Geräteaufnahmeelements aus einer Klasse (B) erfolgen.

3. In einer Weiterbildung der Erfindung kann - je nach Befestigungsanforderung des Tragesystems - eine gezielte Auswahl eines Lastaufnahmeelements aus einer Klasse (C) erfolgen.

4. Durch Punkte (1) bis (3) ergeben sich die vielfältigsten Kombinationsmöglichkeiten von Elementen aller Klassen und damit individuelle Einsatzmöglichkeiten.

5. Kostengünstige Herstellung und Lagerhaltung durch verhältnismäßig wenige Bauelemente.

**Patentansprüche**

1. Baukastenartiges Tragesystem zum Positionieren von Geräten, beispielsweise von Informationsgeräten (101), wobei zwecks Bewegungsraumvergrößerung zwischen einem ortsveränderbaren Geräteaufnahmeelement (1, 1', 1" (Klasse B)) und einem ortsfesten Lastaufnahmeelement (16, 18, 19, 21, 25, 26, 30, 31 (Klasse C)) mindestens ein Tragelement (34, 36, 38, 38') zum Verschwenken um eine vertikale Achse vorgesehen ist, wobei zur drehbeweglichen Verbindung aller Elemente untereinander einheitliche erste zapfenförmige (3) und zweite buchsenförmige (15) Verbindungselemente vorgesehen sind und wobei das Geräteaufnahmeelement (1, 1', 1") ein erstes Verbindungselement (3) und das Lastaufnahmeelement (16, 18, 19, 21, 25, 26, 30, 31) ein zweites Verbindungselement (15) aufweist, **dadurch gekennzeichnet, daß**

eine Klasse (A) von verschiedenartigen Tragelementen (34, 36, 38, 38') vorgesehen ist, um diese einzeln oder in wahlweiser Kombination einzusetzen, wobei

erste Tragelemente als starre, horizontal gerichtete Schwenkarme (34),

zweite Tragelemente als höhenverstellbare Schwenkarme (36), und

dritte Tragelemente als vertikal gerichtete Höhenstöcke (38, 38') ausgebildet sind.

2. System nach Anspruch 1, **dadurch gekennzeichnet,** daß als starre Schwenkarme (34) Typen mit unterschiedlichen Längen vorgesehen sind.

3. System nach Anspruch 1, **dadurch gekennzeichnet,** daß der höhenverstellbare Schwenkarm (36) derart ausgebildet ist, daß er ohne zusätzliche, von außen manuell zu bedienende Arretierungseinrichtung seine vorgegebene Höhenstellung beibehält.

4. System nach Anspruch 1, **dadurch gekennzeichnet,** daß der Höhenstock (38) eine vorgegebene Höhe aufweist.

5. System nach Anspruch 1, **dadurch gekennzeichnet,** daß der Höhenstock (38') mit einer Höheneinstelleinrichtung (39) versehen ist.

6. System nach mindestens einem der Ansprüche 1 bis 5, **dadurch gekennzeichnet,** daß eine Klasse (B) von verschiedenartigen Typen von eine plattenförmige Aufnahme (2) aufweisende Geräteaufnahmeelementen (1, 1`, 1``) vorgesehen ist.

7. System nach Anspruch 6, **dadurch gekennzeichnet,** daß unterhalb der Aufnahme (2) eine zweite Aufnahme (5) angeordnet ist.

8. System nach Anspruch 6 oder 7, **dadurch gekennzeichnet,** daß die zweite Aufnahme (5) eine Verschiebeeinrichtung (6) und/oder eine Kippeinrichtung (9) aufweist.

9. System nach Anspruch 8, **dadurch gekennzeichnet,** daß die zweite Aufnahme (5) einseitig versetzt angeordnet ist.

10. System nach mindestens einem der Ansprüche 1 bis 9, **dadurch gekennzeichnet,** daß eine Klasse (C) von verschiedenartigen Typen von Lastaufnehmerelementen (16, 18, 19, 21, 25, 26, 30, 31) vorgesehen ist.

11. System nach Anspruch 10, **dadurch gekennzeichnet,** daß ein ortsfestes (16, 18, 19, 21, 25, 26, 30) oder ortsveränderliches (31) Lastaufnehmerelement vorgesehen ist.

12. System nach Anspruch 10 oder 11, **dadurch gekennzeichnet,** daß als Lastaufnehmerelement eine Buchse (16) mit einem Befestigungskragen (4) vorgesehen ist.

13. System nach Anspruch 10 oder 11, **dadurch gekennzeichnet,** daß als Lastaufnehmerelement ein Tischbefestigungsträger (18) vorgesehen ist.

14. System nach Anspruch 10 oder 11, **dadurch gekennzeichnet,** daß als Lastaufnehmerelement ein Tischklemmenträger (19) vorgesehen ist.

15. System nach Anspruch 10 oder 11, **dadurch gekennzeichnet,** daß als Lastaufnehmerelement ein Tischaufstellträger (21) vorgesehen ist.

16. System nach Anspruch 10 oder 11, **dadurch gekennzeichnet,** daß als Lastaufnehmerelement ein Säulenträger (25) vorgesehen ist.

17. System nach Anspruch 10 oder 11, **dadurch gekennzeichnet,** daß als Lastaufnehmerelement ein wandträger (26) vorgesehen ist.

18. System nach Anspruch 10 oder 11, **dadurch gekennzeichnet,** daß als Lastaufnehmerelement ein Gestellträger (30) vorgesehen ist.

19. System nach Anspruch 10 oder 11, **dadurch gekennzeichnet,** daß als Lastaufnehmerelement ein Schlitten- oder Laufwagenträger (31) vorgesehen ist.

20. System nach den Ansprüchen 1 bis 19, **dadurch gekennzeichnet,** daß die Verbindungselemente (3, 15) mit einer Verbindungssicherung (44) versehen sind.

## Claims

1. A construction-kit-like support system for the positioning of apparatus, for example of information apparatus (101), at least one supporting element (34, 36, 38, 38') for pivoting about a vertical axis being provided, for the purpose of increasing the movement space, between a movable apparatus-receiving element (1, 1', 1'' (class B)) and a stationary load-receiving element (16, 18, 19, 21, 25, 26, 30, 31 (class C)), uniform first peg-shaped (3) and second bush-shaped (15) connecting elements being provided for the rotational connection of all elements to one another, and the apparatus-receiving element (1, 1', 1'') having a first connecting element (3) and the load-receiving element (16, 18, 19, 21, 25, 26, 30, 31) having a second connecting element (15), characterized in that a class (A) of differing supporting elements (34, 36, 38, 38') is provided in order to use these individually or in a combination of one's choice, the first supporting elements being in the form of rigid, horizontally-directed pivoted arms (34), the second supporting elements being in the form of vertically-adjustable pivoted arms (36) and the third supporting elements being in the form of vertically-directed height posts (38, 38').

2. A system in accordance with Claim 1, characterized in that types of rigid pivoted arms (34) with different lengths are provided.

3. A system in accordance with Claim 1, characterized in that the vertically adjustable pivoted arm (36) is designed in such a manner that it retains its predetermined height position without an additional locking device to be operated manually from the exterior.

4. A system in accordance with Claim 1, characterized in that the height post (38) has a predetermined height.

5. A system in accordance with Claim 1, characterized in that the height post (38') is provided with a height adjusting device (39).

6. A system in accordance with at least one of Claims 1 to 5, characterized in that there is provided a class (B) of differing types of apparatus-receiving elements (1, 1', 1'') having a plate-shaped receiver (2).

7. A system in accordance with Claim 6, characterized in that a second receiver (5) is arranged below the receiver (2).

8. A system in accordance with Claim 6 or 7, characterized in that the second receiver (5) has a displacement device (6) and/or a tilting device (9).

9. A system in accordance with Claim 8, characterized in that the second receiver (5) is arranged displaced to one side.

10. A system in accordance with at least one of Claims 1 to 9, characterized in that there is provided a class (C) of differing types of load-receiver elements (16, 18, 19, 21, 25, 26, 30, 31).

11. A system in accordance with Claim 10, characterized in that a stationary (16, 18, 19, 21, 25, 26, 30) or movable (31) load-receiver element is provided.

12. A system in accordance with Claim 10 or 11, characterized in that a sleeve (16) with a fastening collar (4) is provided as load-receiver element.

13. A system in accordance with Claim 10 or 11, characterized in that a table mounting support (18) is provided as load-receiver element.

14. A system in accordance with Claim 10 or 11, characterized in that a table clamping support (19) is provided as load-receiver element.

15. A system in accordance with Claim 10 or 11, characterized in that a table adjustment support (21) is provided as load-receiver element.

16. A system in accordance with Claim 10 or 11, characterized in that a column support (25) is provided as load-receiver element.

17. A system in accordance with Claim 10 or 11, characterized in that a wall support (26) is provided as load-receiver element.

18. A system in accordance with Claim 10 or 11, characterized in that a frame support (30) is provided as load-receiver element.

19. A system in accordance with Claim 10 or 11, characterized in that a slide support or travelling-carriage support (31) is provided as load-receiver element.

20. A system in accordance with Claims 1 to 19, characterized in that the connecting elements (3, 15) are provided with a connection securing device (44).

**Revendications**

1. Système de support modulaire pour le positionnement d'appareils, par exemple d'appareils d'information (101) dans lequel, afin d'obtenir un agrandissement de l'espace de déplacement entre un élément de réception d'appareils pouvant changer de place (1, 1', 1", classe B) et un élément récepteur de charge fixe (16, 18, 19, 21, 25, 26, 30, 31, classe C) on prévoit au moins un élément-support (34, 36, 38, 38') pour un pivotement autour d'un axe vertical, où des premiers éléments de liaison en forme de téton 3 et des seconds éléments de liaison en forme de manchons 15 étant prévus pour la liaison rotative de tous les éléments les uns par rapport aux autres, individuels et l'élément de réception des appareils (1, 1', 1") comportant un premier élément de liaison (3) et l'élément de réception de charge (16, 18, 19, 21, 25, 26, 30, 31) comportant un second élément de liaison (15), caractérisé en ce qu'est prévue une classe (A) d'éléments-supports (34, 36, 38, 38') de types différents, pour utiliser ceux-ci individuellement ou en combinaisons choisies, les premiers éléments-supports étant des bras pivotants rigides (34) orientés horizontalement, les deuxièmes éléments-supports (36) étant des bras pivotants réglables en hauteur, et les troisièmes éléments-supports étant sous forme de montants (38, 38') orientés verticalement.

2. Système selon la revendication 1, caractérisé en ce qu'on prévoit comme bras pivotant rigide (34) des types de longueurs différentes.

3. Système selon la revendication 1, caractérisé en ce que le bras pivotant (36) réglable en hauteur est formé de telle sorte qu'il maintient sa position en hauteur prédéterminée sans dispositif de blocage à actionner manuellement de l'extérieur.

4. Système selon la revendication 1, caractérisé en ce que le montant (38) présente une hauteur prédéterminée.

5. Système selon la revendication 1, caractérisé en ce que le montant (38') est muni d'un dispositif de réglage en hauteur (39).

6. Système selon au moins l'une des revendications 1 à 5, caractérisé en ce qu'est prévu une classe (B) de types différents d'un récepteur en forme de plaque (2) comportant des éléments de réception d'appareils (1, 1', 1").

7. Système selon la revendication 6, caractérisé en ce qu'à la partie inférieure de l'élément de réception (2) est placé un second élément de réception (5).

8. Système selon la revendication 6 ou 7, caractérisé en ce que le second élément de réception (5) comporte un dispositif de déplacement (6) et/ou un dispositif de pivotement (9).

9. Système selon la revendication 8, caractérisé en ce que le second élément de réception (5) est disposé de façon décalée d'un côté.

10. Système selon au moins l'une des revendications 1 à 9, caractérisé en ce qu'on prévoit une classe C de types différents d'éléments-supports de charge (16, 18, 19, 21, 25, 26, 30, 31.

11. Système selon la revendication 10, caractérisé en ce qu'on prévoit un élément-support de charge fixe (16, 18, 19, 21, 25, 26,30) ou un élément-support de charge mobile (31).

12. Système selon la revendication 10 ou 12, caractérisé en ce qu'on prévoit comme élément-support de charge, un manchon 16 muni d'un collet de fixation (4).

13. Système selon la revendication 10 ou 11, caractérisé en ce qu'on prévoit comme élément-support de charge, un support à fixation sur table (18).

14. Système selon la revendication 10 ou 11, caractérisé en ce qu'on prévoit comme élément-support de charge, un support à serrage sur une table (19).

15. Système selon la revendication 10 ou 11, caractérisé en ce qu'on prévoit comme élément-support de charge, un support à poser sur une table (21).

16. Système selon la revendication 10 ou 11, caractérisé en ce qu'on prévoit comme élément-support de charge, un support à colonne (25).

17. Système selon la revendication 10 ou 11, caractérisé en ce qu'on prévoit comme élément-support de charge, un support mural (26).

18. Système selon la revendication 10 ou 11, caractérisé en ce qu'on prévoit comme élément-support de charge, un support à châssis (30).

19. Système selon la revendication 10 ou 11, caractérisé en ce qu'on prévoit comme élément-support de charge un support à glissement ou chariot (31).

20. Système selon les revendications 1 à 19, caractérisé en ce qu'on prévoit les éléments de liaison (3, 15) munis d'une sécurité de liaison

(44).

Fig.1

Fig.2

Fig.3

Fig.6

Fig.5

Fig.4

2

4

B,1

3

Fig.7

2

3

B,1

4

Fig.8

B,1'

2

4

5

3

Fig.9

2

5

3

4

B,1'

Fig.10

Fig.11

Fig.12

Fig.13

Fig.14

Fig.15

Fig.16

Fig.17

Fig.18

Fig.19

Fig. 20

Fig. 21

14

EP 0 230 236 B1

101

28

C,26

A,36

102

**Fig.22**

103

101

2

B,1

A,34

39

A,38'

C

15

30

**Fig.23**

15

Fig.24

EP 0 230 236 B1